# EUROPEAN PATENT APPLICATION

(11) **EP 4 296 123 A1**
(43) Date of publication of application: **27.12.2023**
(21) Application number: 23180583.9
(22) Date of filing: 21.06.2023
(51) Int. Cl.: B60R 13/10

(54) **NUMBER PLATE HOLDER**

(30) Priority: 22.06.2022 IT 202200013231
(71) Applicant: E.CO. S.r.l., 10043 Orbassano (TO) (IT)
(72) Inventor: RETTAGLIATI, Daniele, 10043 ORBASSANO (TO) (IT)
(74) Representative: Studio Torta S.p.A.

(57) **Abstract**

A number plate holder (1) is described that is designed to be coupled to a number plate (2) comprising a perimetric rim (3), formed by a first, upper rim (30), a second, lower rim (31), and two third, lateral rims (32, 33); a central portion (4) comprising a first face (4a) adapted to be coupled to the number plate (2) and a second face (4b), opposite the first face (4a), adapted to be coupled to a vehicle; the plate holder (1) also comprises a damping element (6); the damping element (6) comprising at least one element including text or a symbol arranged on the first face (4a) and at least one fastening element (7) on the side of said first face (4a).

## Description

### CROSS-REFERENCE TO RELATED APPLICATIONS

This patent application claims priority from Italian patent application no. 102022000013231 filed on June 22, 2022, the entire disclosure of which is incorporated herein by reference.

### TECHNICAL FIELD

This invention relates to a number plate holder suitable for being coupled to a number plate.

The number plate holders are used for mounting different types of number plates on vehicles of different types and makes.

Specifically, the number plate holder is fastened to the vehicle using fastening means and the plate is coupled to the plate holder using additional fastening means.

### BACKGROUND

Known plate holders comprise damping elements, which are suitable for reducing the noises and clicking owing to the vibrations and shocks transmitted by the plate holder to the plate, for example when the vehicle is going or when the door to the boot is closed.

The European patent EP-B1-1772319 describes a plate holder equipped with at least one element of damping material that projects from the surface of the plate holder and is arranged between the plate holder and the plate.

In any case, known plate holders do not illustrate solutions aimed specifically at damping the transmission of vibrations from the vehicle to the plate holder.

European patent EP-B1-3800091, in the name of the same applicant, describes a plate holder equipped with an element of damping material comprising portions that project from the surface of the plate holder and a portion arranged around the entire perimetric rim of the plate holder.

This solution has the following drawbacks. The portions projecting from the surface of the plate holder have a limited surface area and, therefore, only partially dampen the vibrations. In addition, the portion of the damping element arranged around the perimetric rim of the plate holder takes up space and is visible, which may constitute an impediment to fastening any stick element for advertising text below the plate holder and/or may not be aesthetically pleasing.

Therefore, there is a need in the sector to provide a plate holder that enables the efficient dampening of the vibrations and shocks transmitted from the vehicle to the plate, and whose dimensions do not interfere with any stick elements for advertising text.

Again, the presence of damping elements on the surface of the plate holder prevents the printing of advertising text on the plate holder or masks the view of it.

There is, therefore, the need to provide a plate holder that makes it possible to present advertising text and, at the same time, comprises damping elements on the surface of the plate holder in order to limit its vibrations.

### SUMMARY

One purpose of this invention is to provide a plate holder that overcomes the above-mentioned drawbacks in a simple and economical way.

This purpose is obtained with this invention insofar as it relates to a plate holder as defined in claim 1.

### BRIEF DESCRIPTION OF THE DRAWINGS

In order to better understand this invention, a nonlimiting preferred embodiment thereof will be described below by way of example with reference to the accompanying drawings, in which:
- Figure 1 is a perspective view of a plate holder according to this invention, representing the face of the plate holder that can be coupled to the number plate;
- Figure 2 is a perspective view of the plate holder in Figure 1 with two fastening elements of the number plate and a stick element for advertising text illustrated as detached from the plate holder; and
- Figure 3 is detail of the plate holder in Figures 1 and 2.

### DESCRIPTION OF EMBODIMENTS

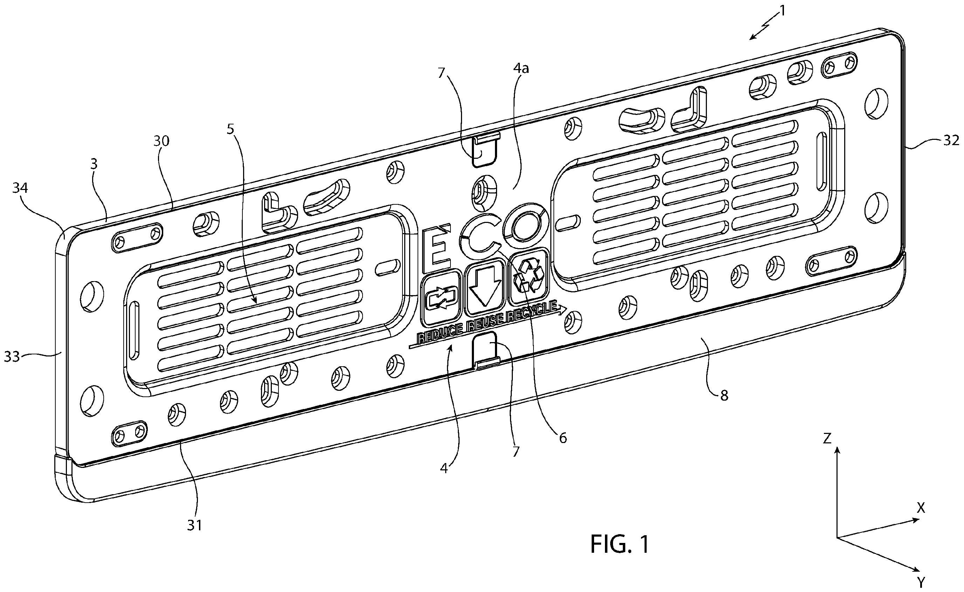

With reference to Figure 1, the reference number 1 indicates a plate holder designed to be coupled to a number plate 2, which comprises a perimetric rim 3 and a central portion 4 delimited by the perimetric rim 3.

In particular, the perimetric rim 3 is formed from an upper rim 30, a lower rim 31, and two lateral rims 32, 33.

In the embodiment shown, the upper and lower rims 30, 31 are parallel to each other and to a direction X. The lateral rims 32, 33 are basically parallel to each other and to a direction Z, transversely in line with the direction X.

It is also possible to define a direction Y, transverse to the directions X, Z.

In use, the directions X, Y are horizontal and the direction Z is vertical.

The upper rim 30, the lower rim 31, and the two lateral rims 32, 33 of the perimetric rim 3 are preferably joined by rounded angles 34.

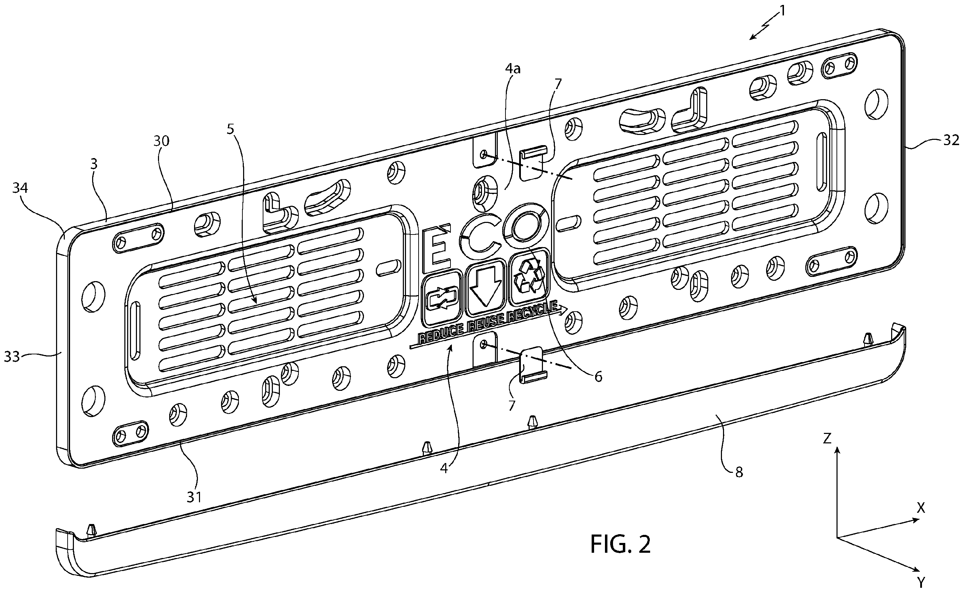

In addition, the central portion 4 comprises a first face 4a (visible in Figures 1 and 2) designed to house the number plate 2 and a second face 4b (not illustrated), opposite the first face 4a, designed to be coupled to the vehicle (not illustrated).

The central portion 4 is parallel to a plane defined by the directions X and Z.

In particular, the vehicle may be a motor vehicle, a motor scooter, a motorcycle, a trailer or any other transport means on which it is necessary to place a number plate 2 by means of the number plate holder 1.

The plate holder 1 is preferably made of plastic, more preferably polypropylene.

As shown in Figures 1 and 2, the central portion 4 comprises holes 5 to fasten the plate holder 1 to the vehicle, using known connection means that are not illustrated.

In particular, the holes 5 are variously shaped, so as to enable the fastening of the plate holder 1 to various types of vehicles.

The central portion 4 also preferably comprises reinforcement ribs, which provide increased stiffness and strength to the plate holder 1.

The plate holder 1 is also coupled to a stick element 8, which is near the lower rim 31 of the perimetric rim 3.

The stick element 8 may be used, in particular, to display advertising text, for example the name of the car dealer.

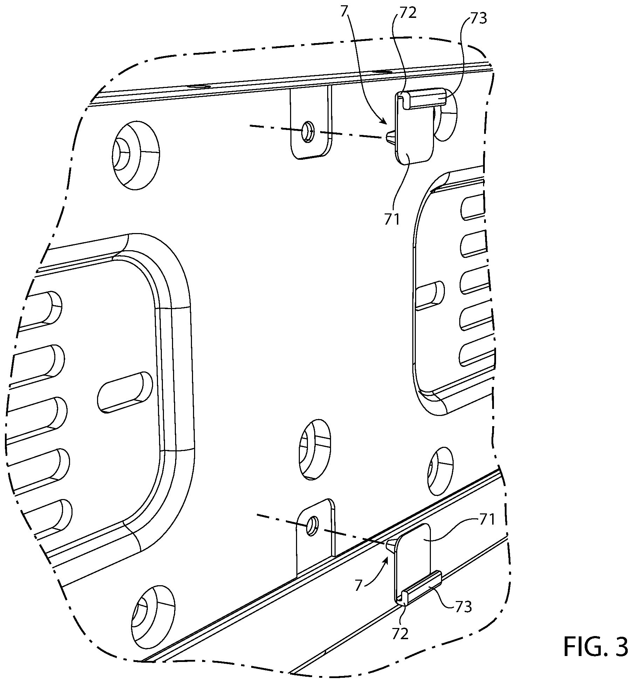

The plate holder 1 advantageously comprises a damping element 6, which is formed from at least one element including text or a symbol arranged on the first face 4a at the central portion 4 and projecting from the first face 4a along a first direction Y. The element including text or a symbol is at least partially in contact with said plate 2, when the plate 2, in use, is coupled to the plate holder 1. In addition, the plate holder 1 also comprises at least one fastening element 7 on the side of the first face 4a interposed between the perimetric rim 3 and the central portion 4 along a second direction Z transversal to the first direction Y. As can be seen in Figure 3, the fastening element comprises:
- a first segment 71 parallel to the first face 4a;
- a second segment 72 orthogonal to the first face 4a and that protrudes from the first segment, and
- a third segment 73 that protrudes from the second segment 72 parallel to the second direction Z toward the central portion 4.

The damping element 6 preferably comprises two or more elements including text or a symbol. This makes it possible to provide different information on the product. The writing may potentially be of more than one colour. The element or elements including text or a symbol may be printed on the plastic of the plate holder 1.

The element including text or a symbol preferably substantially occupies the whole central portion 4. The more space the damping element 6 occupies of the central portion 4, in fact, the greater the damping effect on the vibrations.

The damping element 6 is made of a damping material, preferably elastomeric material.

The fastening element 7 is preferably also formed from elastomeric material and is preferably removable.

The plate holder 1 preferably comprises two fastening elements 7 aligned parallel to one another to the second direction Z and arranged specularly with respect to a median plane of the plate holder orthogonal to the second direction Z.

In use, the plate holder 1 is mounted on the vehicle by means of the holes 5 using connection means, in a known way not illustrated since unnecessary for the purposes of understanding this invention.

In particular, in this condition the face 4b is at least partially in contact with the vehicle.

Subsequently, the plate 2 overlaps the face 4a and, thus, is fastened to the face itself using fastening elements 7 that are elastically moved to enable its insertion. The plate 2 is, thus, coupled in a fixed way to the plate holder 1.

At this point, the plate 2 is completely prevented from moving in relation to the plate holder 1.

The analysis of the features of the plate holder 1 according to this invention clearly reveals the advantages that it achieves.

In particular, the plate holder 1 makes it possible to dampen at the same time and in a suitable way the vibrations and shocks transmitted by the vehicle to the plate holder 1 and by the plate holder 1 to the plate 2. In addition, since the damping element including text or a symbol occupies the majority of the central portion of the plate holder, the anti-vibration effect is particularly effective. This effect is combined with the possibility of having text and images on the plate holder that identify the product or convey advertising messages.

This corresponds to an improvement in the aesthetics and overall efficiency of the damping of vibrations and shocks transmitted by the vehicle to the plate 2 in relation to the known damping elements illustrated in the introduction of this description.

In addition, the plate holder 1 enables the fast and easy decoupling and coupling of the plate 2 from / to the plate holder 1.

Therefore, in countries where this is permitted, it will be possible to remove the plate 2 from the plate holder 1 to apply it, for example, to the trailer towed by the same vehicle, without having to use keys or other tools.

In addition, since the plate holder 1 comprises a particularly thin perimetric rim 3, when the plate 2 and the stick element 8 are applied to the plate holder, the plate holder is virtually invisible.

Moreover, as a result of the reduced dimensions of the plate holder 1, there are numerous additional advantages of an aesthetic kind that may be highlighted.

In fact, since the plate holder 1 better matches the related seat of the vehicle, it is less visible and the plate 2 appears to be directly coupled to the vehicle.

## Claims

1. A number plate holder (1) suitable to be coupled to a number plate (2) comprising:
- a perimetric rim (3) formed by a first rim (30), which is upper in use, a second rim (31), which is lower in use, and two third rims (32, 33), which are lateral in use;
- a central portion (4) comprising a first face (4a) adapted to be coupled to said number plate (2) and a second face (4b), opposite to said first face (4a), adapted to be coupled to a vehicle;
**characterised by** further comprising:
- a damping element (6) comprising at least one element including text or a symbol arranged on the first face (4a) at said central portion (4) and projecting from said first face (4a) along a first direction (Y), said element including text or a symbol being at least partially in contact with said plate (2), when said plate (2), in use, is coupled to said plate holder (1); and
at least one fastening element (7) on the side of said first face (4a) interposed between the perimetric rim (3) and the central portion (4) along a second direction (Z) transversal to the first direction (Y); said fastening element comprising:
- a first segment (71) parallel to said first face (4a);
- a second segment (72) orthogonal to said first face (4a) and protruding from said first segment (71), and
- a third segment (73) which protrudes from said second segment (72) parallel to said second direction (Z) towards said central portion (4).

2. The number plate holder (1) according to claim 1, wherein the damping element (6) comprises two or more elements including text or a symbol.

3. The number plate holder (1) according to claim 1 or 2, wherein at least one element including text of a symbol substantially occupies the whole central portion (4).

4. The number plate holder (1) according to any of the preceding claims, wherein the damping element (6) is made of elastomeric material.

5. The number plate holder (1) according to any of the preceding claims, wherein the at least one fastening element (7) is made of elastomeric material.

6. The number plate holder (1) according to any of the preceding claims, comprising two fastening elements (7) aligned parallel to one another to said second direction (Z) and arranged specularly with respect to a median plane of said number plate holder orthogonal to said second direction (Z) .

7. The number plate holder (1) according to any of the preceding claims, wherein the at least one fastening element (7) is removable.

8. An assembly (100) comprising:
- a number plate holder (1) according to any of the preceding claims; and
- a stick element (8) coupled to the number plate holder (1) .

9. An assembly (100) comprising:
- a number plate holder (1) according to any of claims 1 to 8; and
- a number plate (2) coupled to the number plate holder (1) .
